## Europäisches Patentamt
## European Patent Office
## Office européen des brevets

(19)

(11) Numéro de publication: **0 202 179**
**B1**

(12)
# FASCICULE DE BREVET EUROPEEN

(45) Date de publication du fascicule du brevet:
**17.11.88**

(51) Int. Cl.⁴: **B 65 D 81/24, A 23 B 7/148**

(21) Numéro de dépôt: **86420116.5**

(22) Date de dépôt: **30.04.86**

(54) Procédé de conservation de produits végétaux dans des matériaux opaques à la lumière et non perméables aux gaz.

(30) Priorité: **07.05.85 FR 8507171**

(43) Date de publication de la demande:
**20.11.86 Bulletin 86/47**

(45) Mention de la délivrance du brevet:
**17.11.88 Bulletin 88/46**

(84) Etats contractants désignés:
**AT BE CH DE FR GB IT LI LU NL SE**

(56) Documents cités:
**EP - A - 0 069 642**
**FR - A - 1 536 918**
**FR - A - 2 418 175**
**US - A - 3 795 749**
**US - A - 4 001 443**

(73) Titulaire: **RHONE-POULENC FILMS, 25, quai Paul Doumer, F-92408 Courbevoie (FR)**

(72) Inventeur: **Guidollet, Marcel, 12 A, rue Martin Basse, F-69300 Caluire (FR)**
Inventeur: **de Leiris, Jean-Pierre, 1, rue du Général de Larminat, F-94000 Créteil (FR)**

(74) Mandataire: **Rioufrays, Roger et al, RHONE-POULENC INTERSERVICES Service Brevets Chimie Centre de Recherches de Saint-Fons B.P. 62, F-69192 Saint-Fons Cédex (FR)**

ACTORUM AG

## Description

La présente invention se rapporte à un procédé de conservation de produits végétaux destinés à en assurer la conservation notamment sous une forme prête à l'emploi.

Dans le cadre de la distribution moderne et de la restauration il apparaît intéressant de fournir au marché des produits végétaux prêts à l'emploi, c'est-à-dire parés, lavés, coupés.

Depuis longtemps déjà, un certain nombre de tentatives ont été faites mais pour une question d'économie le choix des matériaux s'est porté sur des films thermoplastiques qui ne sont pas des barrières au gaz (polyoléfine ...): la durée de vie est courte et les atmosphères gazeuses se modifient en fonction de la diffusion différentielle du gaz; on note l'apparition de nécrose des tissus ce qui diminue l'attrait du produit pour le consommateur.

Il est connu également d'utiliser pour les produits végétaux des emballages étanches obtenus à partir de films thermoplastiques thermoscellables ayant des perméabilités faibles vis-à-vis de l'oxygène, du gaz carbonique et de la vapeur d'eau. Les végétaux doivent être préparés avant emballage par mise en œuvre de procédés permettant d'éliminer les bactéries et les moisissures; la conservation est assurée par maintien des articles emballés à basse température.

On trouve ainsi dans le brevet américain US-A-4 001 443 la description d'un procédé d'emballage de végétaux feuillus coupés — notamment de salade — selon lequel les végétaux coupés sont soumis à un traitement consistant successivement à mettre en contact les végétaux avec une solution aqueuse chlorée, à enlever les moisissures adhérentes, à placer les végétaux dans un emballage flexible plastique thermoscellable ayant de faibles perméabilités vis-à-vis de la vapeur d'eau, de l'azote, de l'oxygène et du gaz carbonique, à éliminer partiellement l'air de l'emballage, à thernosceller l'emballage et à conserver le matériau à basse température et dans une humudité relative de 85 à 100%.

Le procédé selon le brevet américain US-A-4 001 443 nécessite la mise en œuvre d'un traitement chimique préalable du matériau végétal ce qui constitue un inconvénient. Un tel procédé nécessite de plus un renouvellement de l'eau chlorée ou tout au moins sa régénération ce qui implique des traitements relativement complexes ou coûteux.

Il apparaissait donc souhaitable de simplifier le procédé et simultanément d'améliorer encore les performances de conservation en maintenant notamment une excellent qualité du produit conservé. La présente invention répond précisément à ce but.

Il a été maintenant trouvé et c'est ce qui constitue l'objet de la présente invention un procédé de conservation de végétaux susceptibles de synthère chlorophylienne consistant à introduire les dits végétaux dans un emballage souple, mince, fermé ayant de faibles perméabilités à la vapeur d'eau, à l'oxygène et au gaz carbonique puis à maintenir l'ensemble à basse température, caractérisé en ce que les végétaux ne subissent aucun traitement chimique préalablement à leur emballage et que le matériau souple est opaque et présente les perméabilités suivantes:

| perméabilité à l'oxygène | < 5 cm³/m²/24 h [température = 23°C oxygène sec pression différentielle 1 atm] |
|---|---|
| perméabilité au gaz carbonique | < 20 cm³/m²/24 h [température = 23°C gaz sec pression différentielle 1 atm] |
| perméabilité à la vapeur d'eau | < 5 g/m²/24 h en conditions tropicales [température = 38°C humidité relative extérieure: 90% humidité relative intérieure: 0%]. |

La présente invention est utilisable avantageusement pour la conservation de végétaux susceptibles de synthèse chlorophylienne [salade (laitue, scarole, mache ...), épinards, oseille...]; l'utilisation d'un emballage étanche aux gaz et à la vapeur d'eau, opaque à la lumière, associé à un stockage en froid positif de 0 à 10°C par exemple permet une auto-conservation accrue du végétal par ralentissement des processus biologiques cellulaires en atmosphère obscure, cette dernière étant enrichie par le végétal en gaz carbonique. Un tel phénomène s'est rélévé être totalement inattendu.

Plus précisement le procédé selon l'invention consiste à maintenir les végétaux dans un emballage étanche, souple, mince et opaque entre 0 et 10°C et préférentiellement entre 2 et 4°C alors que les perméabilités mesurées entre 0 et 10°C sont telles que définies:

| perméabilité à l'oxygène | < 1 cm³/m²/24 h |
|---|---|
| perméabilité au gaz carbonique | < 5 cm³/m²/24 h |
| perméabilité à la vapeur d'eau | < 0,5 g/m²/24 h |
| permeabilité mesurée avec température | < 10°C, gaz sec, pression différentielle: 1 atm. |

L'emballage est avantageusement constitué par un matériau à base de film thermoplastique souple mince et opaque, simple ou complexe.

L'opacité et les caractéristiques barrières sont apportées par exemple par une couche métallique opaque. L'épaisseur du dépôt de métal amenant l'opacité est en général telle que la densité optique soit au moins égale à 2 et préférentiellement égale ou supérieure à 3.

Préférentiellement l'emballage est constitué par un sac en film thermoplastique polymérique, métallisé, simple ou complexe comportant au moins une couche opaque métallique.

Dans un tel contexte on peut utiliser pour l'ensachage tout film thermoplastique métallisé connu [polyéthylène, polypropylène, polyamide, polyester ...] contrecollé avec un film thermoscellable en tout matériau connu [polyéthylène, copolymère d'éthylène et de monomère vinylique [EVA ...]. Le film thermoscellable peut être lui-même un film métallisé [polyéthylène métallisé ...]. A titre illustratif on peut citer les films complexes polyester métallisés vendus par la société Rhône-Poulenc Films sous le nom de Clarylène® .

Le procédé d'emballage s'applique aux produits végétaux tels que carottes, radis, oignons, choux-fleurs, salade, oseille, épinards ...

Le procédé d'emballage est particulièrement intéressant pour la conservation des produits végétaux chlorophyliens. Dans cette catégorie on inclut des végétaux essentiellement feuillus tels que la salade [laitue, scarole, mache ...), épinards, l'oseille ...

Les produits végétaux avant emballage sont lavés, essorés légèrement, puis placés dans un sac façonné dans lequel préférentiellement on fera partir une partie de l'air.

L'atmosphère intérieure de l'emballage, emprisonnée au moment de la fermeture de l'emballage correspond en général à l'air ambiant. Selon une variante de l'invention, cette atmosphère peut être modifiée en introduisant par exemple des gaz tels que de l'azote, du gaz carbonique, et éventuellement de l'oxygène [mélange air et gaz carbonique] en vue d'obtenir les meilleurs performances de conservation, le mélange gazeux étant adapté aux produits végétaux; en ce qui concerne la salade il n'apparaît pas avantageux pour la durée de conservation, de modifier l'atmosphère gazeuse.

Avant emballage les produits végétaux peuvent être lavés, parés et coupés sur les lieux de production ce qui supprime toute gache au niveau de la consommation.

Selon une variante de la présente invention on peut emballer les produits végétaux dans des sachets individuels fermés ou non constitués par des films minces transparents et souples très perméables au gaz et regrouper ensuite l'ensemble des sachets dans des sacs fermés étanches et opaques de la présente invention et de taille plus importante. Cette manière d'opérer permet en ouvrant à la demande les sacs opaques d'assurer le conditionnement unitaire et la vision du produit végétal sur les linéaires de vente.

Enfin la présente invention a pour objet des articles emballés constitués par des produits végétaux conservés dans des emballages à base de films plastiques minces, souples et opaques à la lumière et ayant vis-à-vis des gaz des perméabilités faibles telles que:

perméabilité
à l'oxygène      $< 5 \ cm^3/m^2/24 \ h$
                       [température = 23°C
                       oxygène sec
                       pression différentielle 1 atm]

perméabilité
au gaz carbonique      $< 20 \ cm^3/m^2/24 \ h$
                       [température = 23°C
                       gaz sec
                       pression différentielle 1 atm]

perméabilité
à la vapeur d'eau      $< 5 \ g/m^2/24 \ h$
                       en conditions tropicales
                       [température = 38°C
                       humidité extérieure: 90%
                       humidité intérieure: 0%].

Outre la bonne conservation des matériau végétaux, les emballages selon la présente invention permettent lorsque cela est désiré, de maintenir l'aspect coloré initial du végétal tel qu'il était au moment de la récolte. Ainsi pour certaines salades telles que les scaroles il peut être intéressant de les récolter avec un aspect à dominante jaune et de conserver cet aspect lors de la mise en vente.

Les exemples suivantes illustrent l'invention:

### Exemple 1

On pare des laitues maraichères, les effeuille, les lave à l'eau ordinaire, les égoutte avec précaution pour éviter de casser les feuilles et on les emballe par 3 kg dans 1 sac constitué par un polyester métallisé 12 micron, contrecollé sur un polyéthylène de 38 microns [film complexe clarylène ® 12038 vendu par Rhône-Poulenc Films].

Les caractéristiques du sac sont les suivantes:

. opacité:             la densité optique
                       est égale à 3

. perméabilité $O_2$     $< 0,5 \ cm^3/m^2/24 \ h$ à + 2°C

. perméabilité $CO_2$     $< 1 \ cm^3/m^2/24 \ h$ à + 2°C

. perméabilité $H_2O$     $< 0,2 \ g/m^2/24 \ h$ à + 2°C.

On presse le sac entre 2 coussins de mousse pour éliminer l'air en excès et on thermoscelle.

On place en chambre froide à + 2°C et on constate au bout de 15 jours, par rapport au témoin conditionné de façon classique en caisse de bois, que la salade a conservé toute sa fraicheur [pas de modification de couleur, pas d'apparition de nécrose]; on note une bonne odeur de végétal frais à l'ouverture du sachet, alors que la salade témoin avait séché en périphérie, perdu sa couleur verte agréable et nécessitait l'élimination d'une parte importante de feuilles abimées.

Le même essai poursuivi sur 3 semaines a donné des résultats tout à fait comparables.

### Exemple 2

On pare des laitues maraichères et les introduit individuellement dans un sachet transparent de polyéthylène de 20 microns d'épaisseur non fermé; on introduit 20 laitues côte à côte dans 1 sac thermoplastique opaque tel que défini à l'exemple 1.

On élimine l'air contenu dans le sac scellé, et conserve le tout en chambre froide à + 2°C.

On constate au bout de 15 jours par rapport au témoin conditionné en caisse bois, un excellent état de conservation de la laitue [couleur, odeur ...] sans perte de poids.

## Revendications

1. Procédé de conservation de végétaux susceptibles de synthèse chlorophylienne consistant à introduire les dits végétaux dans un emballage souple, mince, fermé ayant de faibles perméabilités à la vapeur d'eau, à l'oxygène et au gaz carbonique puis à maintenir l'ensemble à basse température, caractérisé en ce que les végétaux ne subissent aucun traitement chimique préalablement à leur emballage et que le matériau souple est opaque et présente les perméabilités suivantes:

perméabilité
à l'oxygène     $< 5$ cm$^3$/m$^2$/24 h
[température = 23°C
oxygène sec
pression différentielle 1 atm]

perméabilité
au gaz carbonique     $< 20$ cm$^3$/m$^2$/24 h
[température = 23°C
gaz sec
pression différentielle 1 atm]

perméabilité
à la vapeur d'eau     $< 5$ g/m$^2$/24 h
en conditions tropicales
[température = 38°C
humidité relative
extérieure: 90%
humidité relative
intérieure: 0%]

2. Procédé selon la revendication 1, caractérisé en ce que la température est maintenu entre 0 et 10°C alors que les valeurs des perméabilités de l'emballage mesurées entre 0 et 10°C sont définies comme suit:

perméabilité à l'oxygène     $< 1$ cm$^3$/m$^2$/24 h

perméabilité au gaz carbonique     $< 5$ cm$^3$/m$^2$/24 h

perméabilité à la vapeur d'eau     $< 0,5$ g/m$^2$/24 h

3. Procédé selon la revendication 1 ou 2, caractérisé en ce que l'emballage est constitué par un film thermoplastique mince, opaque, simple ou complexe.

4. Procédé selon la revendication 1, 2 ou 3, caractérisé en ce que l'emballage est constitué par un film thermoplastique opaque métallisé, simple ou complexe comportant au moins une couche opaque métallisée.

5. Procédé selon la revendication 4, caractérisé en ce que l'emballage est constitué par un film thermoplastique complexe métallisé, constitué par un film métallisé contrecollé avec un 2ème film métallisé.

## Patentansprüche

1. Verfahren zur Konservierung von pflanzlichen Produkten, die zur Chlorophylsynthese in der Lage sind, bestehend im Einbringen dieser pflanzlichen Produkte in eine flexible, dünne, geschlossene Hülle, die geringe Durchlässigkeit für Wasserdampf, Sauerstoff und Kohlendioxid besitzt, und anschliessendem Halten der Anordnung bei niedriger Temperatur, dadurch gekennzeichnet, dass die pflanzlichen Produkte vor dem Einbringen in die Hülle bzw. Verpackung keiner chemischen Behandlung unterworfen worden sind, und das flexible Material opak ist und die folgenden Durchlässigkeiten besitzt:

Durchlässigkeit
für Sauerstoff     $< 5$ cm$^3$/m$^2 \cdot 24$ h
[Temperatur = 23°C
trockener Sauerstoff
Differentialdruck 1 Atm]

Durchlässigkeit
für Kohlendioxid     $< 20$ cm$^3$/m$^2 \cdot 24$ h
[Temperatur = 23°C
trockenes Gas
Differentialdruck 1 Atm]

Durchlässigkeit
für Wasserdampf     $< 5$ g/m$^2 \cdot 24$ h
unter tropischen Bedingungen
[Temperatur = 38°C
relative äussere
Feuchtigkeit 90%
relative innere
Feuchtigkeit 0%]

2. Verfahren nach Anspruch 1, dadurch gekennzeichnet, dass die Temperatur zwischen 0 und 10°C gehalten wird, wobei die Durchlässigkeitswerte der Verpackung bei 0 bis 10°C gemessen folgendermassen sind:

Durchlässigkeit
für Sauerstoff     $< 1$ cm$^3$/m$^2 \cdot 24$ h

Durchlässigkeit
für Kohlendioxid     $< 5$ cm$^3$/m$^2 \cdot 24$ h

Durchlässigkeit
für Wasserdampf     $< 0,5$ g/m$^2 \cdot 24$ h

3. Verfahren nach Anspruch 1 oder 2, dadurch gekennzeichnet, dass die Verpackung aus einer dünnen, opaken, einfachen oder komplexen thermoplastischen Folie besteht.

4. Verfahren nach Anspruch 1, 2 oder 3, dadurch gekennzeichnet, dass die Verpackung aus einer opaken, metallisierten, einfachen oder komplexen thermoplastischen Folie besteht, die mindestens eine opake, metallisierte Schicht umfasst.

5. Verfahren nach Anspruch 4, dadurch gekennzeichnet, dass die Verpackung aus einer komplexen, metallisierten, thermoplastischen Folie besteht, die aus einer metallisierten Folie besteht, die mit einer zweiten metallisierten Folie verklebt ist.

## Claims

1. Process for preserving vegetables which are prone to chlorophyllous synthesis, which process consists of introducing the said vegetables into a supple, thin and closed packaging which has low permeabilities to water vapour, oxygen and carbon dioxide and subsequently maintaining the whole at low temperature, characterized in that the vegetables do not undergo any chemical treatment prior to their packaging and in that the supple material is opaque and has the following permeabilities:

permeability
to oxygen            $< 5 \ cm^3/m^2/24 \ h$
[temperature = 23°C
dry oxygen
differential pressure 1 atm]

permeability
to carbon dioxide    $< 20 \ cm^3/m^2/24 \ h$
[temperature = 23°C
dry gas
differential pressure 1 atm]

permeability
to water vapour     $< 5 \ g/m^2/24 \ h$
under tropical conditions
[temperature = 38°C
external relative
humidity: 90%
internal relative
humidity: 0%].

2. Process according to Claim 1, characterized in that the temperature is maintained between 0 and 10°C, while the values of the permeabilities of the packaging, measured between 0 and 10°C are defined as follows:

permeability to oxygen        $< 1 \ cm^3/m^2/24 \ h$

permeability to carbon dioxide    $< 5 \ cm^3/m^2/24 \ h$

permeability to water vapour    $< 0.5 \ g/m^2/24 \ h$

3. Process according to Claim 1 or 2, characterized in that the packaging consists of a thin, opaque, simple or composite thermoplastic film.

4. Process according to Claim 1, 2 or 3 characterized in that the packaging consists of an opaque, metallized, simple or composite thermoplastic film comprising at least one opaque metallized layer.

5. Process according to claim 4, characterized in that the packaging consists of a composite metallized thermoplastic film consisting of a metallized film laminated to a 2nd metallized film.